# EUROPEAN PATENT APPLICATION

(11) **EP 4 793 602 A1**
(43) Date of publication of application: **19.08.2026**
(21) Application number: 26157160.8
(22) Date of filing: 09.02.2026
(51) Int. Cl.: G01D 11/30, B60R 16/02, G01D 5/20, H02G 3/32, G01D 5/244, H02G 15/007, H02K 11/21

(54) **HOLDING STRUCTURE FOR CONNECTOR CABLE**

(30) Priority: 14.02.2025 JP 2025022705
(71) Applicant: Toyota Jidosha Kabushiki Kaisha, Toyota-shi, Aichi-ken 471-8571 (JP)
(72) Inventor: TAKENAKA, Tetsuhiro, Toyota-shi, Aichi-ken, 471-8571 (JP); OBATA, Masahiro, Toyota-shi, Aichi-ken, 471-8571 (JP); ASAOKA, Hironori, Toyota-shi, Aichi-ken, 471-8571 (JP); YOSHIKAWA, Makoto, Toyota-shi, Aichi-ken, 471-8571 (JP)
(74) Representative: TBK

(57) **Abstract**

A holding structure (2, 102) for a connector cable (12, 12A, 12B, 12C) includes: a connector portion (10) configured to be detachably attached to a device body; the connector cable (12, 12A, 12B, 12C), one end of which is connected to the connector portion (10); and a cable holding portion (14, 114) fixed to the connector portion (10) and configured to hold the connector cable (12, 12A, 12B, 12C). The connector cable (12, 12A, 12B, 12C) extending between the connector portion and the cable holding portion (14, 114) is bent.

## Description

### BACKGROUND OF THE INVENTION

### 1. Field of the Invention

The technology of the present disclosure relates to a holding structure for a connector cable.

### 2. Description of Related Art

Japanese Unexamined Patent Application Publication No. 2000-274559 (JP 2000-274559 A) discloses a holding structure for a connector cable, the holding structure including a connector portion that is detachably attached to a device body, and a connector cable, one end of which is connected to the connector portion.

### SUMMARY OF THE INVENTION

In the holding structure according to JP 2000-274559 A, a clamp part is provided in the vicinity of the connector portion. The connector cable is hooked onto the clamp part. JP 2000-274559 A does not take into consideration the possibility that the connector cable may be damaged when vibration is input from the outside.

The present disclosure provides a holding structure for a connector cable, the holding structure being capable of suppressing the connector cable being damaged when vibration is input from the outside.

A first aspect of the present disclosure provides a holding structure for a connector cable, including: a connector portion configured to be detachably attached to a device body; the connector cable, one end of which is connected to the connector portion; and a cable holding portion fixed to the connector portion and configured to hold the connector cable. The connector cable extending between the connector portion and the cable holding portion is bent.

According to the above configuration, it is possible to suppress the connector cable coming into contact with other components, even when vibration is input from the outside, since the connector cable is held by the cable holding portion. Furthermore, since the connector cable extending between the connector portion and the cable holding portion is bent, the connector cable has more freedom of movement compared to a configuration in which the connector cable extends linearly. Thus, it is possible to suppress the connector cable being damaged when vibration is input from the outside.

In a holding structure according to a second aspect, in addition to the first aspect, a predetermined range of the connector cable may be covered by a covering member. the cable holding portion may hold the connector cable via the covering member.

According to the above configuration, the durability of the connector cable can be improved compared to a configuration in which the cable holding portion directly holds the connector cable.

In a holding structure according to a third aspect, in addition to the first or second aspect, the cable holding portion may have a fitting portion configured to fit with the covering member.

According to the above configuration, the covering member can be firmly held by the cable holding portion.

In a holding structure according to a fourth aspect, in addition to the third aspect, the cable holding portion may have a fitting groove extending along a specific direction and configured such that the covering member and the connector cable are disposed in the fitting groove. The fitting groove may have a width that increases toward one side in the specific direction.

According to the above configuration, the covering member can be easily fitted into the fitting groove.

In a holding structure according to a fifth aspect, in addition to any one of the first to fourth aspects, the cable holding portion may be connected to the connector portion via a beam portion that extends from the connector portion. A mass of the cable holding portion may be greater than a mass of the beam portion.

According to the above configuration, the cable holding portion is held via the flexible beam portion, and functions as a mass of a dynamic damper. Therefore, vibration transmitted to the connector cable can be suppressed.

In a holding structure according to a sixth aspect, in addition to any one of the first to fifth aspects, the cable holding portion may include a clamp portion configured to clamp the connector cable.

According to the above configuration, the connector cable can be firmly held by the cable holding portion.

In a holding structure according to a seventh aspect, in addition to any one of the first to sixth aspects, the device body may be a sensor.

The sensor may be used in an environment in which vibration is input from the outside. Thus, it is possible to suppress the connector cable being damaged when vibration is input from the outside.

In a holding structure according to an eighth aspect, in addition to any one of the first to seventh aspects, the device body may be a resolver configured to detect an angle of a rotor of a motor.

The resolver may be used in an environment in which vibration is input from the outside. Thus, it is possible to suppress the connector cable being damaged when vibration is input from the outside.

In a holding structure according to a ninth aspect, in addition to any one of the first to eighth aspects, an extending direction of the connector cable may change by 90 degrees or more between the connector portion and the cable holding portion.

### BRIEF DESCRIPTION OF THE DRAWINGS

Features, advantages, and technical and industrial significance of exemplary embodiments of the invention will be described below with reference to the accompanying drawings, in which like signs denote like elements, and wherein:
FIG. 1 is a schematic view of a holding structure for a connector cable;
FIG. 2 is a cross-sectional view of a cable holding portion and a connector cable as seen from the Y direction;
FIG. 3 is a view of the cable holding portion as seen from the Z direction;
FIG. 4 illustrates a state before a covering member is held by the cable holding portion;
   and
FIG. 5 is a schematic view of a holding structure for a connector cable.

### DETAILED DESCRIPTION OF EMBODIMENTS

### Embodiment

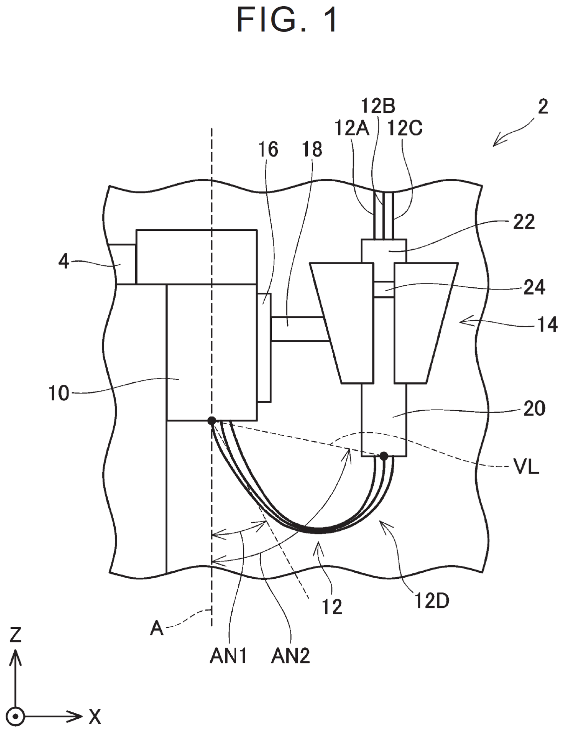

A holding structure 2 for a connector cable will be described with reference to FIGS. 1 to 3. Hereinafter, the holding structure 2 for a connector cable will be referred to as the "holding structure 2". The holding structure 2 according to the embodiment is a structure that holds a connector cable to be attached to a resolver 4 that detects the angle of a rotor of a motor.

The holding structure 2 includes a connector portion 10, a plurality of connector cables 12A to 12C, a cable holding portion 14, a base portion 16, and a beam portion 18. Hereinafter, the connector cables 12A to 12C will be collectively referred to as "connector cables 12". The connector portion 10 is detachably attached to the resolver 4.

One end of the connector cable 12 is connected to the connector portion 10, and the other end of the connector cable 12 is connected to a connector portion (not illustrated) attached to a control device such as an Electronic Control Unit (ECU). A predetermined range of the connector cable 12 is covered by a covering member 20. The predetermined range will be described in detail later. Hereinafter, a portion of the connector cable 12 that extends between the connector portion 10 and the covering member 20 will be referred to as an "extending portion 12D". The angle between a central axis A of the connector portion 10 and the extending portion 12D in the vicinity of the connector portion 10 is an angle AN1. Furthermore, the angle between the central axis A of the connector portion 10 and a virtual line VL connecting an end portion of the connector portion 10 in the -Z direction and an end portion of the covering member 20 in the -Z direction is an angle AN2. The angle AN1 is smaller than the angle AN2. Moreover, the total length of the extending portion 12D is shorter than the virtual line VL. That is, the extending portion 12D is bent in a held state in which the covering member 20 is held by the cable holding portion 14. In addition, in the held state, the extending direction of the extending portion 12D changes by substantially 180 degrees between the connector portion 10 and the covering member 20. Specifically, the extending direction of the extending portion 12D changes from the -Z direction to the Z direction.

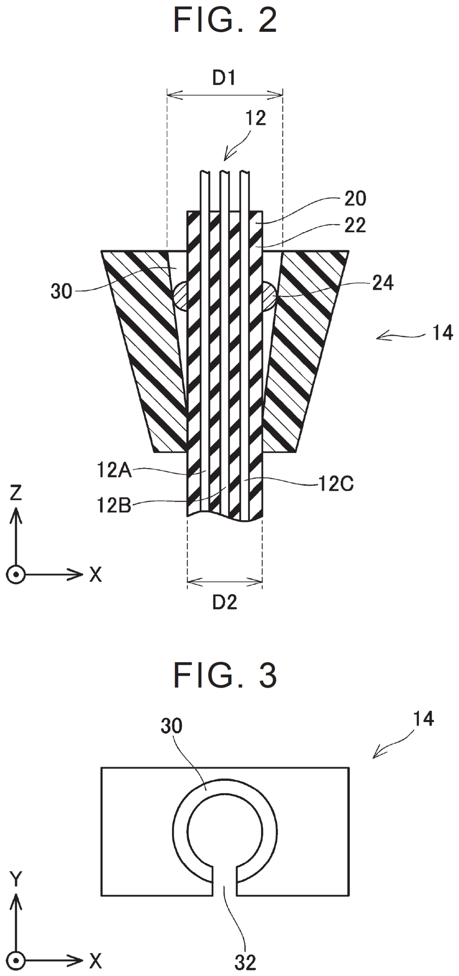

As illustrated in FIG. 2, the covering member 20 includes a body portion 22 and a protruding portion 24. The body portion 22 has a cylindrical shape (solid shape). An end portion of the body portion 22 in the -Z direction is located on the -Z direction side with respect to an end portion of the cable holding portion 14 in the -Z direction. An end portion of the body portion 22 in the Z direction is located on the Z direction side with respect to an end portion of the cable holding portion 14 in the Z direction. That is, the body portion 22 is longer than the cable holding portion 14 in the Z direction. The body portion 22 holds the connector cable 12 therein. The protruding portion 24 has an annular shape that protrudes outward from the outer peripheral surface of the body portion 22. The protruding portion 24 is provided over the entire circumference of the outer peripheral surface of the body portion 22. By way of example, the covering member 20 is made of vinyl chloride, polyethylene, or urethane. In a modification, the protruding portion 24 may not be provided over the entire circumference of the outer peripheral surface of the body portion 22. By way of example, the protruding portion 24 may include one or more protrusions.

As illustrated in FIG. 1, the cable holding portion 14 faces the connector portion 10 in the X direction. The cable holding portion 14 has a truncated pyramid shape in which the width between both ends in the X direction reduces toward the -Z direction. As illustrated in FIG. 3, the cable holding portion 14 has a fitting groove 30 and a slit 32. The fitting groove 30 is provided in the central portion of the cable holding portion 14. The fitting groove 30 and the slit 32 extend along the Z direction. The slit 32 communicates with the fitting groove 30. The width of the slit 32 in the X direction is designed to be large enough to allow passage of the connector cable 12.

As illustrated in FIG. 2, the fitting groove 30 has a diameter that increases in the Z direction. A diameter D1 of the fitting groove 30 at an end portion in the Z direction is larger than the outer diameter of the protruding portion 24 of the covering member 20. A diameter D2 of the fitting groove 30 at an end portion in the -Z direction is substantially equal to the diameter of the covering member 20. The diameter D2 of the fitting groove 30 at an end portion in the -Z direction is smaller than the outside diameter of the protruding portion 24 of the covering member 20.

As illustrated in FIG. 1, the base portion 16 is fixed to the connector portion 10. By way of example, the base portion 16 is adhered to the connector portion 10. The base portion 16 has a flat plate shape. The beam portion 18 connects the base portion 16 and the cable holding portion 14. Moreover, the beam portion 18 has flexibility (bending elasticity). Since the base portion 16 is connected to the connector portion 10, the cable holding portion 14 is connected to the connector portion 10 via the beam portion 18.

By way of example, the cable holding portion 14, the base portion 16, and the beam portion 18 are made of a resin. In the present embodiment, the total of the mass of the cable holding portion 14 and the mass of the covering member 20 is greater than the mass of the beam portion 18. The mass of the cable holding portion 14 is also greater than the mass of the beam portion 18. With such a configuration, the covering member 20 and the cable holding portion 14 may function as a mass of a dynamic damper. That is, the covering member 20 and the cable holding portion 14 may vibrate with respect to the connector portion 10. In the present embodiment, the predetermined range of the connector cable 12 is adjusted such that the extending portion 12D in the held state is bent to an extent that does not hinder the operation of the covering member 20 and the cable holding portion 14 functioning as a mass of a dynamic damper.

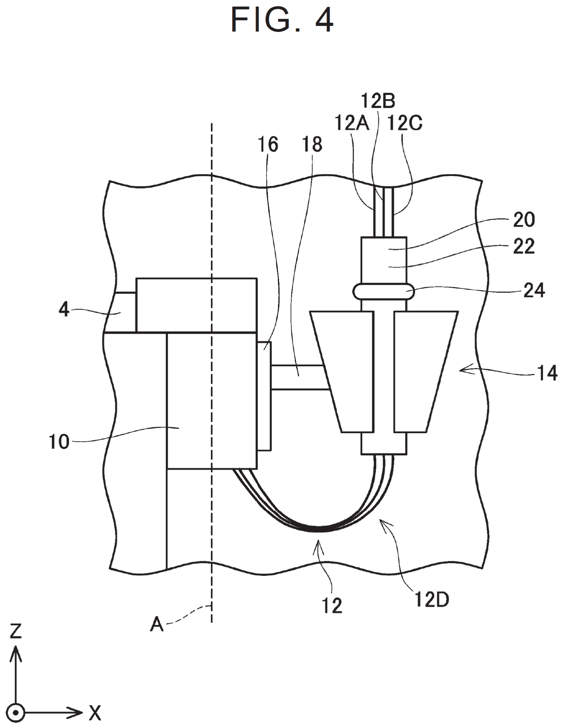

A procedure for causing the cable holding portion 14 to hold the covering member 20 will be described with reference to FIG. 4. First, as illustrated in FIG. 4, a portion of the covering member 20 is placed in the fitting groove 30 of the cable holding portion 14. Then, the connector portion 10 is attached to the resolver 4. After that, the covering member 20 is moved in the -Z direction. Consequently, as illustrated in FIG. 2, the protruding portion 24 of the covering member 20 comes into abutment with the fitting groove 30 of the cable holding portion 14, and the covering member 20 fits into the fitting groove 30. As a result, the covering member 20 is held by the cable holding portion 14. That is, the connector cable 12 is held by the cable holding portion 14 via the covering member 20. Furthermore, with the covering member 20 held by the cable holding portion 14, one end of the connector cable 12 approaches the central axis A of the connector portion 10.

As described above, the holding structure 2 includes: the connector portion 10 that is detachably attached to the resolver 4 (an example of "device body"); the connector cable 12, one end of which is connected to the connector portion 10; and the cable holding portion 14 that is fixed to the connector portion 10 and holds the connector cable 12. The connector cable 12 extending between the connector portion 10 and the cable holding portion 14 is bent.

According to the above configuration, it is possible to suppress the connector cable 12 coming into contact with other components, even when vibration is input from the outside, since the connector cable 12 is held by the cable holding portion 14. Furthermore, since the connector cable 12 extending between the connector portion 10 and the cable holding portion 14 is bent, the connector cable 12 has more freedom of movement compared to a configuration in which the connector cable 12 extends linearly. Thus, it is possible to suppress the connector cable 12 being damaged when vibration is input from the outside.

In particular, the resolver 4 may be used in an environment in which vibration is input from the outside. Thus, it is possible to suppress the connector cable 12 being damaged when vibration is input from the outside.

A predetermined range of the connector cable 12 is covered by the covering member 20. The cable holding portion 14 holds the connector cable 12 via the covering member 20.

According to the above configuration, the durability of the connector cable 12 can be improved compared to a configuration in which the cable holding portion 14 directly holds the connector cable 12.

The cable holding portion 14 also has the fitting groove 30 (an example of "fitting portion") into which the covering member 20 fits.

According to the above configuration, the covering member 20 can be firmly held by the cable holding portion 14.

The cable holding portion 14 also has the fitting groove 30 that extends along the Z direction (an example of "specific direction") and in which the covering member 20 and the connector cable 12 are disposed. The width of the fitting groove 30 increases toward the Z direction (an example of "one side in the specific direction").

According to the above configuration, the covering member 20 can be easily fitted into the fitting groove 30.

Furthermore, the cable holding portion 14 is connected to the connector portion 10 via the beam portion 18 that extends from the connector portion 10. The mass of the cable holding portion 14 is greater than the mass of the beam portion 18.

According to the above configuration, the cable holding portion 14 is held via the flexible beam portion 18, and functions as a mass of a dynamic damper. Therefore, vibration transmitted to the connector cable 12 can be suppressed.

While a specific example of the present disclosure has been described in detail above, this is merely exemplary and does not limit the present disclosure. The technology of the present disclosure includes various modifications and alterations of the specific example indicated above.

### First Modification

The cable holding portion 14 may not have a fitting groove. In the present modification, the covering member 20 may be fixed to the cable holding portion 14 with an adhesive or the like. In another modification, the cable holding portion 14 may not have a fitting groove, and the connector cable 12 may not be covered by the covering member 20. In the present modification, the connector cable 12 may be fixed to the cable holding portion 14 with an adhesive or the like.

### Second Modification

The cable holding portion 14 may have a recess corresponding to the protruding portion 24 of the covering member 20. In the present modification, the recess is also an example of "fitting portion". Alternatively, the body portion 22 of the covering member 20 may be provided with a recess, and the cable holding portion 14 may have a protruding portion corresponding to the recess. In the present modification, the protruding portion is also an example of "fitting portion".

### Third Modification

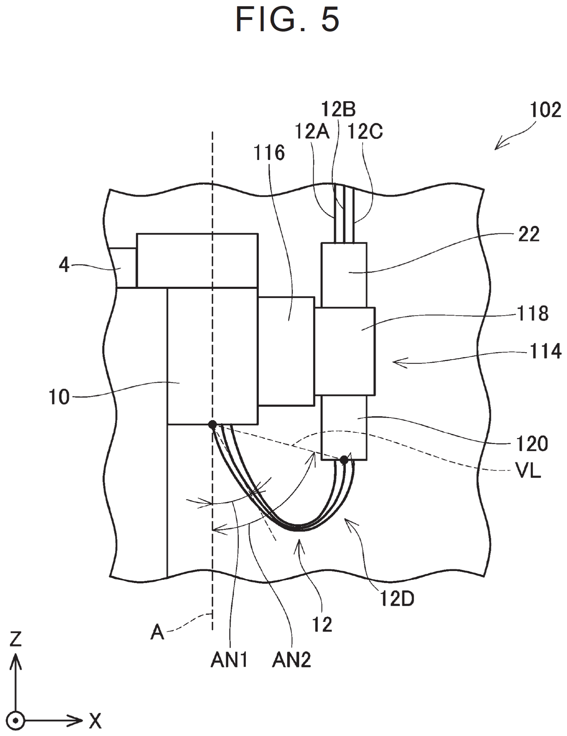

A holding structure 102 for a connector cable according to a third modification will be described with reference to FIG. 5. The same components as those in the embodiment are denoted by the same reference signs and the description thereof will be omitted.

As illustrated in FIG. 5, the holding structure 102 includes a connector portion 10, a plurality of connector cables 12A to 12C, and a cable holding portion 114. The cable holding portion 114 includes a base portion 116 and a clamp portion 118. The base portion 116 is fixed to the connector portion 10. The clamp portion 118 is connected to the base portion 116. The clamp portion 118 clamps the outer peripheral surface of a covering member 120. The covering member 120 is the same as the covering member 20 of the embodiment except for not having a protruding portion. This configuration also makes it possible to suppress wear and damage to the connector cable 12. Furthermore, the covering member 120 (connector cable 12) can be firmly held by the cable holding portion 114.

In the modification, the connector cable 12 may not be covered by the covering member 120. In the present modification, the cable holding portion 114 directly holds the connector cable 12.

### Fourth Modification

The "device body" is not limited to the resolver 4, and may be a sensor that detects a rotational speed, etc.

### Fifth Modification

The change in the extending direction of the connector cable 12 between the connector portion 10 and the covering member 20 may be less than 90 degrees.

The technical elements described in the present disclosure exhibit technical utility alone or in various combinations, and are not limited to the combinations set forth in the claims at the time of filing. The technology exemplified in the present disclosure may achieve a plurality of objects at the same time, and has technical utility by achieving one of the objects itself.

## Claims

1. A holding structure (2, 102) for a connector cable (12, 12A, 12B, 12C), the holding structure (2, 102) comprising:
a connector portion (10) configured to be detachably attached to a device body;
the connector cable (12, 12A, 12B, 12C), one end of which is connected to the connector portion (10); and
a cable holding portion (14, 114) fixed to the connector portion (10) and configured to hold the connector cable (12, 12A, 12B, 12C), wherein the connector cable (12, 12A, 12B, 12C) extending between the connector portion (10) and the cable holding portion (14, 114) is bent.

2. The holding structure (2, 102) according to claim 1, wherein:
a predetermined range of the connector cable (12, 12A, 12B, 12C) is covered by a covering member (20, 120); and
the cable holding portion (14, 114) is configured to hold the connector cable (12, 12A, 12B, 12C) via the covering member (20, 120).

3. The holding structure (2) according to claim 2, wherein the cable holding portion (14) has a fitting portion configured to fit with the covering member (20).

4. The holding structure (2) according to claim 3, wherein:
the cable holding portion (14) has a fitting groove (30) extending along a specific direction and configured such that the covering member and the connector cable (12, 12A, 12B, 12C) are disposed in the fitting groove (30); and
the fitting groove (30) has a width that increases toward one side in the specific direction.

5. The holding structure (2) according to claim 1, wherein:
the cable holding portion (14) is connected to the connector portion (10) via a beam portion (18) that extends from the connector portion (10); and
a mass of the cable holding portion (14) is greater than a mass of the beam portion (18).

6. The holding structure (102) according to claim 1, wherein the cable holding portion (114) includes a clamp portion (118) configured to clamp the connector cable (12, 12A, 12B, 12C).

7. The holding structure (2, 102) according to claim 1, wherein the device body is a sensor.

8. The holding structure (2, 102) according to claim 1, wherein the device body is a resolver (4) configured to detect an angle of a rotor of a motor.

9. The holding structure (2, 102) according to claim 1, wherein an extending direction of the connector cable (12, 12A, 12B, 12C) changes by 90 degrees or more between the connector portion (10) and the cable holding portion (14, 114).
